(19) Europäisches Patentamt
European Patent Office
Office européen des brevets

(11) **EP 2 337 006 A1**

(12) **EUROPEAN PATENT APPLICATION**

(43) Date of publication:
**22.06.2011 Bulletin 2011/25**

(51) Int Cl.:
***G09B 19/04*** *(2006.01)*

(21) Application number: **10192315.9**

(22) Date of filing: **24.11.2010**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **24.11.2009 GB 0920480**

(71) Applicant: **Yu, Kai**
**Cambridge**
**Cambridgeshire CB5 8LR (GB)**

(72) Inventor: **Yu, Kai**
**Cambridge**
**Cambridgeshire CB5 8LR (GB)**

(74) Representative: **Martin, Philip John**
**Marks & Clerk LLP**
**62-68 Hills Road**
**Cambridge**
**CB2 1LA (GB)**

(54) **Speech processing and learning**

(57) This invention relates to the field of tonal language speech signal processing. We describe a computer system for characterising samples of a tonal language. These are analysed to identify one or more vocal tract characterising parameters of the user and synthesised speech data is generated by modifying a variation of fundamental frequency with time using a set of standard tones. The synthesised speech data represents the user speaking the tonal language with the modified fundamental frequency. Graphical feedback to guide the user can also be provided.

Figure 12

**Description**

**Field of the invention**

This invention relates to the field of speech signal processing and computer-assisted pronunciation learning.

**Background of the invention**

Tone is a key feature of tonal languages such as Chinese and Thai. In tonal languages, tone plays an important role to distinguish words, carry meaning and transform the emotion. Inaccurate or wrong tone pronunciation will result in significant confusion in communication. Hence, tone pronunciation quality is a main criterion to evaluate the proficiency of a tonal language. Tone pronunciation is one of the biggest obstacles in the spoken language learning for the learners whose native language is not a tonal language.

Computer assisted spoken language learning provides an efficient way for learning a language. It has been accepted by more and more learners. One important feature is that the computer can provide feedback information for the learners, including pronunciation evaluation and pronunciation instruction. We will describe advanced signal processing techniques which provide facilitate the learning of tone pronunciation in tonal languages, using an enhanced error feedback mechanism.

Background prior art relating to tone evaluation and learning can be found in CN101383103; and CN1815522. In these, instructions on tone pronunciation are given based on predefined rules. There are three limitations in this kind of rule-based preset instructions:

1) The instruction suggestion is abstract and dogmatic. Different learners may have different understanding of the instructions.
2) Tone is produced from the vibration of vocal cords which is almost impossible to be explicitly and accurately controlled by following the text instructions.
3) The general instructions may conflict with specific realizations of tones from different learners or based on different learning content.

Hence, the help that the learners obtain from the instructions is very limited. Except for the pronunciation instruction, some learning systems also provide standard tone pronunciation from native speaker as a demonstration. But these sounds are unacquainted for the learners, it is therefore difficult to exactly imitate it or even properly perceive it.

The feedback information provided by the existing tone pronunciation learning systems is abstract and tedious, and can not effectively guide the learner. The learner has to blindly imitate the standard pronunciation and can not get rich, intuitive and effective instructions from interaction with the system. Such systems are incomplete. Hence, it is desirable to develop more effective tone pronunciation learning system which can provide vivid, intuitional and user-friendly feedback information and make the learners self-perceptive for tone pronunciation errors.

**Summary of the invention**

According to a first aspect of the invention there is provided a tonal language teaching computer system, the computer system comprising working memory, non-volatile program memory, non-volatile data memory storing tone definition data, said tone definition data defining a variation of fundamental frequency with time for each of a set of standard tones of said tonal language, a speech data input, and a processor coupled to said working memory, to said program memory, to said data memory, and to said speech input and wherein said program memory stores processor control code to: input from speech data for a user characterising sample of said tonal language spoken by a user of the computer system; analyse said user characterising sample speech data to identify one or more vocal tract characterising parameters characterising the vocal tract of said user; generate synthesised speech data representing said user speaking said tonal language by modifying a said variation of fundamental frequency with time for one of said standard tones using said one or more vocal tract characterising parameters characterising the vocal tract of said user; and output said synthesised speech data generating synthesised speech for said user from said synthesised speech data.

In preferred embodiments one or more vocal tract characterising parameters characterising the vocal tract of said user comprise a set of parameters defining a filter of a source-filter model of said vocal tract of said user, for example modelling formants of a user's speech. Said synthesised speech data is generated by exciting said filter of said source-filter model at said fundamental frequency having a said variation with time of one of said standard tones.

In preferred embodiments said tone definition data defining a variation of fundamental frequency with time for each of a set of standard tones of said tonal language comprises data representing a said standard tone as a polynomial including parameter for one or both of a mean speaking pitch of a speaker and a scale of pitch change of said speaker;

and said one or more vocal tract characterising parameters characterising the vocal tract of said user comprise parameters representing one or both of a said mean speaking pitch of said user and a said scale of pitch change of said user.

In preferred embodiments said processor control code further comprises code to: input speech data for user teaching sample of said tonal language spoken by said user; identify a spoken said standard tone in said user teaching sample speech data; and wherein said one of said standard tones modified by said vocal tract characterising parameters comprising said identified spoken standard tone. The user teaching sample may be the same sample as the user characterising sample of speech.

In preferred embodiments said code to identify said spoken standard tone comprises code to implement a plurality of hidden Markov models (HMMs), wherein a said HMM models a tone to be identified as the tone in combination with at least a portion of one or both of a predecessor tone and a successor tone. However a speaker may speak a single tone or read from text, so it is not essential to be able to analyse speech input to locate tone boundaries in continuous speech.

According to a second aspect of the invention there is provided a tonal language teaching computer system, the computer system comprising working memory, non-volatile program memory, a speech data input, and a processor coupled to said working memory, to said program memory, to said data memory, and to said speech input and wherein said program memory stores processor control code to: input speech data for a sample of said input from speech data for a user characterising sample of said tonal language spoken by a user of the computer system; match said speech data to each of said set of standard tones defined by said tone definition data to determine a match probability for each said standard tone; determine a graphical representation of a weighted combination of said standard tones, and said graphical representation comprising a combined representation of said changes in fundamental frequency over time of said standard tones, wherein a said change in fundamental frequency over time of each said standard tone is weighted by a respective said match probability; and output data for displaying said graphical representation to said user.

In preferred embodiments the tonal language teaching computer system further comprises code to identify a segment of speech data comprising substantially a single tone to match each of said set of standard tones.

In preferred embodiments the code to determine said graphical representation comprises code to compute a weighted combination of a set of polynomial functions, wherein each said polynomial function represents a said change in fundamental frequency over time of a said standard tone.

In another aspect of the invention there is provided a tonal language teaching computer system, the computer system comprising working memory, non-volatile program memory, a speech data input, and a processor coupled to said working memory, to said program memory to said data memory, and to said speech input and wherein said program memory stores processor control code to: input speech data for a tonal language spoken by a user of the computer system; provide a user interface for said user, wherein said user interface provides a graphical representation of a weighted combination of changes in fundamental frequency over time of a set of standard tones of said tonal language wherein a said change in fundamental frequency over time of each said standard tone is weighted by a respective match probability of said speech data to the standard tone.

In another aspect of the invention there is provided a tonal language teaching computer system, the computer system comprising working memory, non-volatile program memory: a speech data input, and a processor coupled to said working memory, to said program memory, to said data memory, and to said speech input and wherein said program memory stores processor control code to: input speech data for a tonal language spoken by a user of the computer system; communicate said speech data to a speech data analysis system to identify one or more vocal tract characterising parameters characterising the vocal tract of said user for modifying standard tones of said tonal language using said one or more vocal tract characterising parameters characterising the vocal tract of said user; receive synthesised speech data from said speech data analysis system, said synthesised speech data generate synthesised speech data representing said user speaking said tonal language; output synthesised speech generated from said synthesised speech data.

In another aspect of the invention there is provided a method of identifying tones in a speech data sample of a tonal language, the method comprising: inputting said speech data; constructing a plurality of hidden Markov models (HMMs), wherein a said HMM models a tone to be identified as the tone in combination with at least a portion of one or both of a predecessor tone and a successor tone; matching tones represented by said speech data sample using said HMM; and identifying boundaries of said tones in time within said speech data sample responsive to said matching; and outputting boundary data representing said identified boundaries.

In another aspect of the invention there is provided a system for processing tonal speech data and generating corrected tonal output data responsive to identified tonal feature data, the system comprising: a feature extraction module having an input to receive said tonal speech data, said feature extraction module decomposing said tonal speech data to generate excitation data defining a variation of fundamental frequency with time of said tonal speech data, further generating impulse response data defining said tonal speech data substantially excluding said variation of fundamental frequency with time of said tonal speech data; a tonal feature extractor having an input to receive said excitation data and said impulse response data, said tonal feature extractor processing said excitation data and said impulse response data using a probabilistic model to estimate a first and second tonal boundary in said excitation data and said impulse response data and generate a first impulse response data item defining a first segment of said variation of fundamental frequency with time of said tonal speech data bounded by said first and second tonal boundaries and generate a first excitation data item defining said first segment of said tonal speech data bounded by said first and second tonal boundary substantially excluding said variation of fundamental frequency with time; a tonal memory to store target predetermined tonal data items comprising target excitation data items;

a tonal substitution module to receive said first excitation data item, said tonal substitution module substituting said first excitation data item with a selected target excitation data item from said predetermined tonal data items, said selected target excitation data item defining an excitation to be learnt, further comprising means for combining said selected target excitation data item with said first impulse response data item to generate a corrected first tonal speech data item; outputting said corrected tonal output data, said corrected output data comprising said corrected first tonal speech data item. In the model training phase, the tonal memory is populated with predetermined tonal data items. During the learning phase, a user is prompted for input. The user prompt is then used to determine which target excitation data item is selected from the tonal memory (the tone to be learnt).

In preferred embodiments said selected target excitation data item and said first impulse response data item are of different durations, and said target excitation data item is modified to generate a target excitation data item of the same duration as said first impulse response data item, further using said target excitation data item of the same duration instead of said target excitation data item.

In preferred embodiments said target excitation data item is interpolated to generate said target excitation data item of the same duration as said first impulse response data item.

In preferred embodiments said probabilistic model in said tonal feature extractor is a plurality of Hidden Markov Models (HMMs). The probabilistic model may alternatively be a plurality of tri-tone HMMs, identifying the location of a tone by using tones before and after.

In preferred embodiments the system further comprises a tonal feature evaluation module, said tonal feature evaluation module comprising means for comparing said first excitation data item with said predetermined tonal data items to generate excitation matching probabilities defining the posterior probability of each of said predetermined tonal data items; using said excitation matching probabilities in combination with a mathematical representation of said predetermined tonal data items to determine weighted posterior probabilities, said weighted posterior probabilities comprising said mathematical representation of said predetermined tonal data items weighted by said excitation matching probabilities; and using said weighted posterior probability to graphically represent the accuracy of said first excitation data item.

In another aspect of the invention there is provided a method of processing tonal speech data and generating corrected tonal output data responsive to identified tonal feature data, the method comprising: decomposing said tonal speech data to generate excitation data defining a variation of fundamental frequency with time of said tonal speech data, further generating impulse response data defining said tonal speech data substantially excluding said variation of fundamental frequency with time of said tonal speech data; processing said excitation data and said impulse response data using a probabilistic model to estimate a first and second tonal boundary in said excitation data and said impulse response data and generate a first impulse response data item defining a first segment of said variation of fundamental frequency with time of said tonal speech data bounded by said first and second tonal boundaries and generate a first excitation data item defining said first segment of said tonal speech data bounded by said first and second tonal boundary substantially excluding said variation of fundamental frequency with time; storing target predetermined tonal data items comprising target excitation data items; substituting said first excitation data item with a selected target excitation data item from said predetermined tonal data items, said selected target excitation data item defining an excitation to be learnt, combining said selected target excitation data item with said first impulse response data item to generate a corrected first tonal speech data item; outputting said corrected tonal output data, said corrected output data comprising said corrected first tonal speech data item.

In preferred embodiments said selected target excitation data item and said first impulse response data item are of different durations, and the method further comprises modifying said target excitation data item to generate a target excitation data item of the same duration as said first impulse response data item, further using said target excitation data item of the same duration instead of said target excitation data item.

In preferred embodiments said target excitation data item is interpolated to generate said target excitation data item of the same duration as said first impulse response data item.

In preferred embodiments said probabilistic model in said tonal feature extractor is a plurality of Hidden Markov Models (HMMs). The probabilistic model may also be a plurality of tri-tone HMMs.

In preferred embodiments the method may further comprise means for comparing said first excitation data item with said predetermined tonal data items to generate excitation matching probabilities defining the posterior probability of each of said predetermined tonal data items; using said excitation matching probabilities in combination with a mathematical representation of said predetermined tonal data items to determine weighted posterior probabilities, said weighted posterior probabilities comprising said mathematical representation of said predetermined tonal data items weighted by said excitation matching probabilities; and using said weighted posterior probability to graphically represent the accuracy of said first excitation data item.

The invention also provides a tonal language speech processing computer system, the computer system comprising working memory, non-volatile program memory, a speech data input, and a processor coupled to said working memory, to said program memory, to said data memory, and to said speech input and wherein said program memory stores processor control code to: input speech data for a sample of said tonal language; analyse said speed data to identify one or more vocal tract characterising parameters characterising the vocal tract of a speaker of said language sample to determine speaker characterising data; and output data derived from said speaker characterising data.

Preferably the one or more vocal tract characterising parameters characterising the vocal tract of the speaker comprise one or both of: i) a set of parameters defining a source-filter model of the vocal tract of the user, wherein the synthesised speech data is generated by exciting the source-filter model at the fundamental frequency having a said variation with time of one of the standard tones; and ii) parameters representing one or both of a said mean speaking pitch of the user and a said scale of pitch change of the user.

The skilled person will understand that features of the above described aspects and embodiments of the invention may be combined.

The skilled person will understand that the tonal language teaching computer system may be implemented in a distributed fashion over a network, for example as a client server system. In other embodiments the computing system may be implemented upon any suitable computing device including, but not limited to, a laptop, a mobile computing device such as a PDA and so forth. The invention also provides a tonal language speech processing computer system, the computer system comprising working memory, non-volatile program memory, a speech data input, and a processor coupled to said working memory, to said program memory to said data memory, and to said speech input and wherein said program memory stores processor control code to: input speech data for a sample of said tonal language; analyse said speed data to identify one or more vocal tract characterising parameters characterising the vocal tract of a speaker of said language sample to determine speaker characterising data; and output data derived from said speaker characterising data.

The invention further provides computer program code to implement embodiments of the system. The code may be provided on a carrier such as a disk, for example a CD-or DVD-ROM, or in programmed memory for example as Firmware. Code (and/or data) to implement embodiments of the invention may comprise source, object or executable code in a conventional programming language (interpreted or compiled) such as C, or assembly code, code for setting up or controlling an ASIC (Application Specific Integrated Circuit) or FPGA (Field Programmable Gate Array), or code for a hardware description language such as Verilog (Trade Mark) or VHDL (Very high speed integrated circuit Hardware Description Language). As the skilled person will appreciate such code and/or data may be distributed between a plurality of coupled components in communication with one another.

**Detailed description of preferred embodiments**

This invention describes a method to provide vivid, intuitional and amusing feedback information for tone pronunciation learner by synthesising the learner's speech with target tone and drawing smoothed tone curve of the learner's original speech. The learner can explicitly perceive tone error in his pronunciation via both audio and visual feedback, and is heuristically inducted to rectify his tone pronunciation. The invention can improve the efficiency of tone pronunciation learning.

The tone pronunciation learning method with error self-perceptive function includes three parts:

1) Evaluation of tone pronunciation
Tone features are extracted from the learner's speech waveform based on the theory of speech signal processing. A set of tone evaluation features is computed based on some specific tone models. These parameters are then mapped into meaningful scores.
2) Synthesis of learner's speech with target tone
According to source-filter modelling of speech signals, speech waveform can be factorized into spectrum, which describes vocal movement of the learner, and fundamental frequency (tone feature), which describes the excitation of any sound produced by the learner. Spectrum and tone features are extracted from learner's original speech respectively. The original tone can be replaced as the target tone using tone conversion techniques. Then, the learner's speech with the target tone is re-synthesised and played to the learner.
3) Drawing of error-dependent tone curve
The smoothed curve of the learner's tone is computed using tone curve fitting technique to reflect the degree of tone pronunciation errors. It is then provided to the learner together with standard tone curve.

Tone models are first trained on pre-collected data with correct tone pronunciations, and then used to analyse and recognize tone pronunciation from learners. Then quantative tone evaluation score is calculated using the scoring approach described later. With tone conversion techniques, new speech of the learner with target tone is synthesised and fed back to the learner. Finally smoothed tone curves reflecting the degree of tone pronunciation error is drawn. The learner can then intuitively apperceive the tone pronunciation error, and is inducted to improve his tone pronunciation.

In the embodiments of the proposed method, there are three main features in the evaluation of tone pronunciation quality as follows:

1) A large amount of speech data with standard tone pronunciations is collected. Using mature speech signal analysis algorithms, pitch features, also refereed to as fundamental frequency or F0 features, are extracted. These features represent the tone information. Elaborate feature smoothing (such as removing out-liers, modifying double and halved frequency error and linear interpolation, etc.) followed by feature normalization is performed.

2) In order to better capture the effect of co-articulation on the tone pattern, we choose context-dependent HMM (Hidden Markov Model) to model tones. One HMM is used for each tone context, in which not only the centre tone but also the left and the right neighbouring tones are considered. Specifically, tri-tone HMMs is a preferred choice.

3) A set of grading parameters that reflect the tone pronunciation quality are computed using context-dependent tone HMMs. These parameters include tone posteriors, tone GOP (Goodness of Pronunciation) score, tone duration and tone type from recognition.

In embodiments, using tri-tone HMM model has the following advantages:

1) It can better model the effect of co-articulation on the tone pattern

2) When computing the GOP score for tones, syllable segmentation for speech is not necessary beforehand and more accurate GOP score can be obtained.

3) The tone posterior probability computed based on the tri-tone model is more precise than the ones from other models such as GMM (Gaussian Mixture Model)-based tone model and HMM-based mono-tone model.

In embodiments speech synthesis with target tone is based on source-filter model of speech signal. The basic procedure includes:

1) Learner's speech waveform is analyzed and decomposed into two independent components: excitation (i.e. F0) and impulse response (i.e. spectrum).

2) The F0 sequence of target tone is generated using either rule-based or data template-based method. The F0 sequence from learner's speech is replaced by the one from the target tone. Due to different durations between the target tone and the learner's tone, appropriate time scaling or interpolation may apply here.

3) Based on the source-filter model, the learner's speech with target tone is re-synthesized by using the F0 sequence of target tone and filter banks representing the impulse response of the learner's vocal tract (i.e. the extracted spectrum).

According to source-filter modelling, spectrum and F0 (tone) features are independent. In embodiments, the tone conversion does not change the spectrum of input speech. Hence the phonetic pronunciation and speaker-dependent characteristics of the learner can be kept in speech re-synthesis. It makes the learner can more attentively focus on apperceiving tone pronunciation error and revising it, and at the same time also increases the entertainment of tone pronunciation learning.

In embodiments, rule-based F0 sequence generation method is based on time-normalized functions of the standard tone realization summarized from phonetics experiments.

In embodiments, data template-based F0 sequence generation method is to use a template of F0 sequence of the same syllable extracted from native language speakers as the F0 sequence of target tone.

In embodiments, data template-based and rule-based method can be combined to generate more accurate F0 sequence generation of target tone, which will improve tone perception. It is worth noting that the invented F0 sequence generation of target tone is different from the methods declared in patents CN1920945 and CN1912994. CN1920945 and CN1912994 adopt vocal tract model, and convert tone by modifying the amplitude and tone value.

In embodiments, the generation of error-dependent tone curve uses the following technique:

1) A set of polynomial functions are constructed for each tone. In Mandarin Chinese, four quadratic functions are employed for the four tones respectively.

2) Tone posterior probability is calculated for the learner's input speech.

3) A new quadratic function is constructed by using the posterior to weight the coefficients of the four basis functions.

With this approach, the curvature and trend of the constructed F0 curve reflect the error degree of the learner's tone pronunciation. The drawn tone curve carries more instructive information by weighting the tone quadratic function by the posterior probability of tone recognition. This curve can not only identify the different tone types but also demonstrate the tone pronunciation accuracy of same tone type. Hence it can show meaningful difference from the reference (correct) tone curve. It is apparently better than just draw the tone curve of reference tone. What's more, the drawn F0 curve is not the raw fundamental frequency trajectory which is prone to signal processing errors and noise. By constructing a smooth curve and compare it to the smooth reference tone curve, it is easy to concentrate and perceive the difference or errors without introducing unnecessary confusions.

In embodiments the declared method can provide useful help for the learners on different scales of study units, such as character, word and sentence. The declared method can seamlessly integrate into other spoken language leaning system.

**Brief Description of the Drawings**

Figure 1 shows a block diagram of an embodiment of the learning system.

Figure 2 shows a computing procedure of tone posterior based on tri-tone HMM model;

Figure 3 shows the generating procedure of target tone based on source-filter model;

Figure 4 shows the computing procedure of tone curve of standard tone and original tone.

Figure 5 shows an example of an excitation (F0) tone curve of the actual pronunciation and standard tone of a specific Chinese character.

Figure 6 shows an example of tone boundary vs phone boundary in Mandarin

Figure 7 shows a comparison between raw F0 curve and posterior-weighted interpolated F0 curve from 4 basis functions of F0 curve.

Figure 8 shows a flow chart of boundary processing for continuous speech.

Figure 9 shows the tri-tone HMM training procedure.

Figure 10 shows the topology of HMM-based tone model.

Figure 11 shows a source-filter model....

Figure 12 shows an alternate block diagram summarising the components of the learning system.

**Detailed Description of the Drawings**

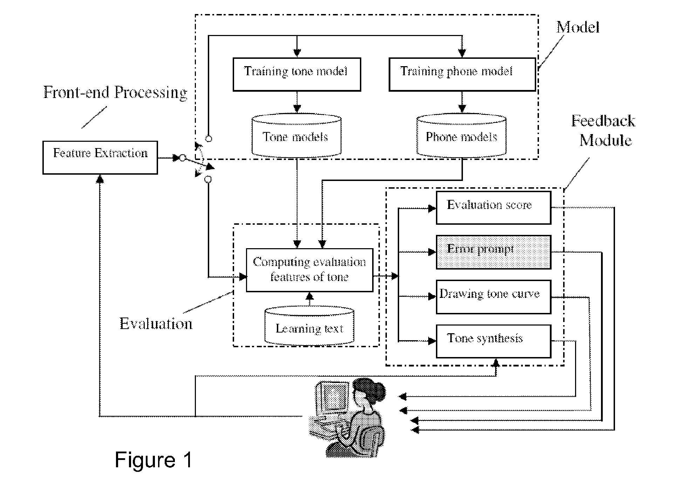

Figure 1 shows function modules of a Mandarin tone pronunciation learning system using the proposed method, including: front-end processing, model training module, evaluation module and feedback module.

Model training module is to train HMM-based phone model and tri-tone model. Evaluation features reflecting tone pronunciation quality are computed using phone model and tri-tone model in evaluation module. These parameters include Goodness-Of-Pronunciation (GOP) score, tone posterior probability, tone duration and so on. In the invention, the computation of GOP score and tone posterior probability is not dependent on the syllable boundary due to the use of tri-tone models.

The feedback module includes four sub-modules, where tone error prompt sub-module is optional. The error prompt sub-module can tell the learner tone error type and how to correct it. Tone scoring module can give the learner a meaningful score which directly reflects the tone pronunciation quality. The score may have various forms, such as five-category or centesimal system.

After the learner pronounces the prompted text, acoustic features, spectrum and tone features, are extracted in the front-end processing module. The evaluation features are computed in the evaluation module. Tone evaluation score is given in the tone scoring sub-module. The learner's speech with target tone synthesised in tone synthesis sub-module and the tone curve of learner's speech drawn in the drawing tone curve module are then fed back to the leaner. The leaner can apperceive tone pronunciation error from the feedback information, and re-pronounces after tuning own pronunciation manner. The system evaluates the tone pronunciation again, and gives the feedback. Repeating in this way, a learning loop of pronunciation-evaluation-feedback is formed.

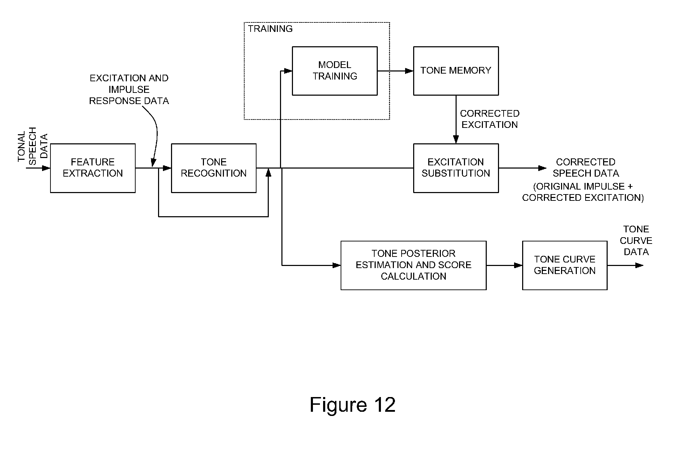

Figure 12 shows an alternate block diagram summarising the components of the learning system. Tonal speech data is received by a feature extraction module which separates the tonal speech data into excitation and impulse information. Tone recognition may then be performed (or optionally omitted if only a single tone is spoken for example). Excitation data (F0) can be substituted by a corrected excitation from the tone memory and combined with the impulse response data to generate corrected speech. The corrected speech combines the user's original impulse component and corrected excitation component of the spoken tones. Posterior probability and tone evaluation scores are generated in the Tone Posterior Estimation and Score Calculation module, and then a tone curve generated to graphically display to the user the tone curve of the target (reference) tone and the recognized tone.

Detailed example of the invention on Mandarin tone learning

1, Construction of standard tone pronunciation speech corpus database

a, Text to be recorded should cover all phones and syllables. The distribution of common phone/syllable and tone should be balanced. Text includes single-syllable word, multi-syllable word and sentence.
b, Gender of speakers is balanced, and distribution of age is Gaussian. Speakers are checked to ensure they speak good standard Mandarin. Some further check is performed after data collection to remove outliers.

2, Build of phone model

a, PLP (perceptive linear prediction) features are extracted from data frame with size of 25ms and 10ms frame shift.

b, CDHMM-based (Continuous Density HMM) phone model is then trained for each Mandarin phone on PLP features.

3, Build of tone model

a, Tone features, i.e. fundamental frequency (F0) and Energy, are extracted from data frame with size of 25ms and 10ms frame shift.
b, Smoothing F0 sequences (such as removing aberrant point, modifying the double and half frequency error and linear interpolation) and normalizing F0 and energy (alleviate the difference of tone range of different speakers).
c, Training tri-tone CDHMM model for each tone context.

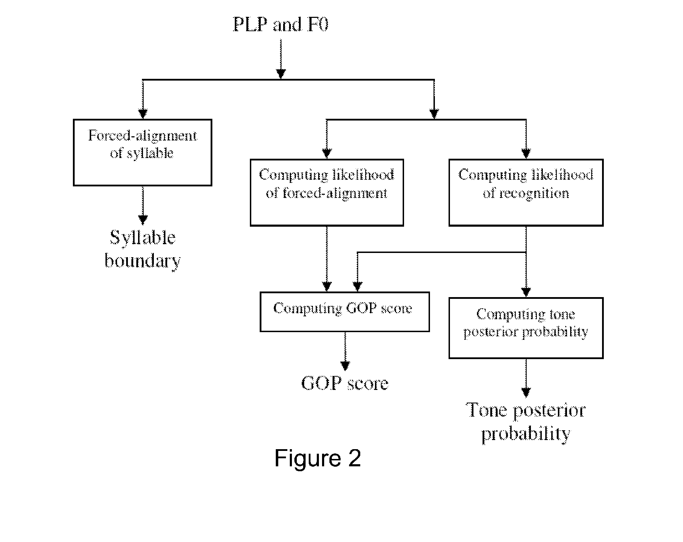

4, Computation of tone pronunciation evaluation score (Figure 2)

a, Computing a set of features for tone evaluation, including GOP score, i.e. the likelihood ratio between recognised tone and reference tone, tone posterior probability, tone duration and recognised tone label.
b, Mapping the above evaluation features into understandable score by pre-trained score mapping function.

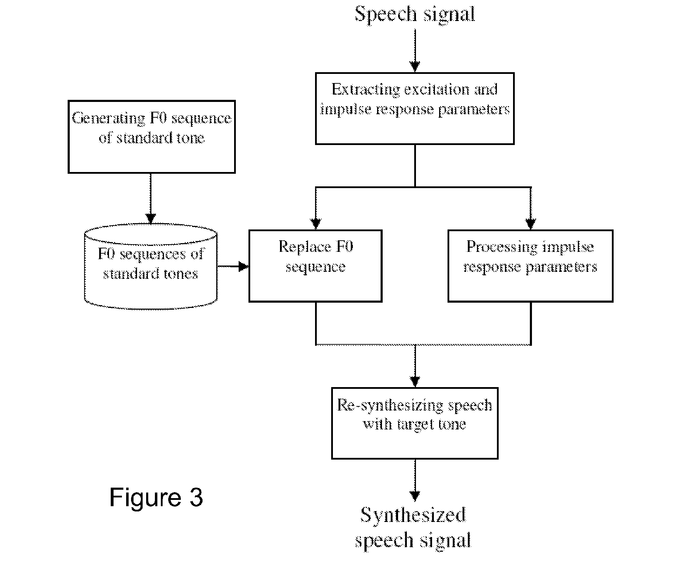

5, Synthesis of the learner's speech with target tone (Figure 3)

a, Performing forced-alignment of syllable using phone models on the learner's speech and getting the syllable boundary
b, Decomposing speech signal into F0 and spectrum on each syllable
c, Replacing the F0 sequence of the original audio by the F0 sequence of the target tone using either the rule-based or data template-based method
d, Re-synthesizing the learner's speech with the modified F0 sequence and the original spectrum sequence.

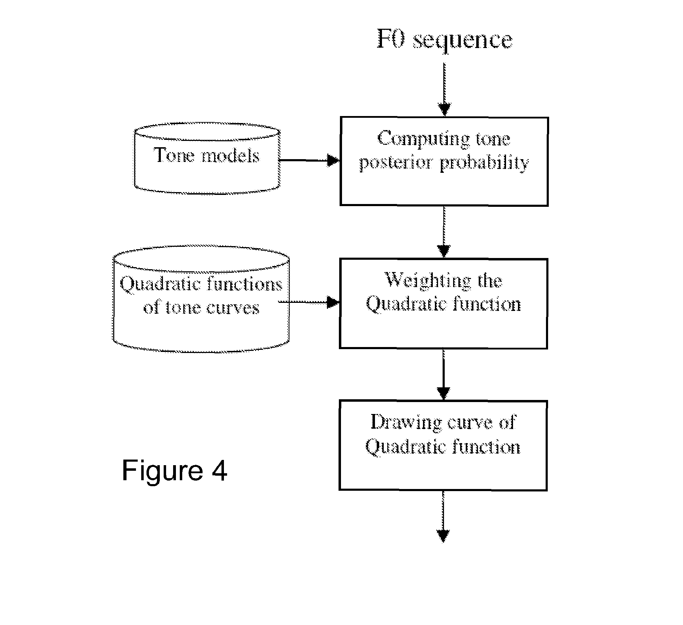

6, Generation of error-dependent tone curve of the learner's speech (Figure 4)

a, Computing posterior probability of each tone based using tri-tone HMM model
b, Generating the quadratic function corresponding to the recognized tone by weighting the four basis quadratic functions using corresponding tone posterior probabilities.
c, Drawing the tone curve of the target (reference) tone and the recognized tone.

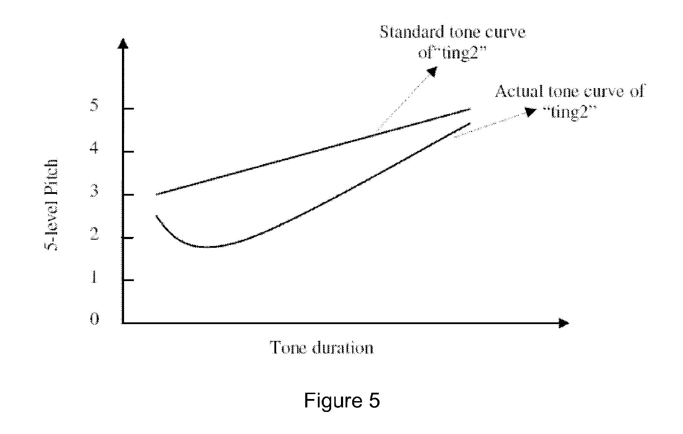

Figure 5 gives an illustration of the F0 curves of the actual pronunciation and standard tone of Chinese character 停 meaning "stop". The standard pronunciation of the Chinese character 停 meaning "stop" is "ting2", where 2 represents tone 2 (rising tone). We can observe that the learner pronounces tone 2 like tone 3 (falling-rising tone), but is not standard tone 3. Hence, when pronouncing the tone, the learner should not tighten his vocal cord but release it instead.

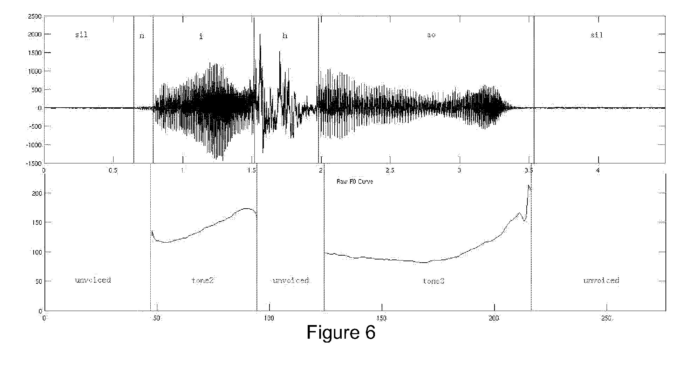

Figure 6 shows an example of tone boundary vs. phone boundary in Mandarin. Phone boundaries are shown on the upper part of the plot, showing separate phones for "n", "i", "h" and "ao". Tone boundaries are shown on the lower part of the plot.

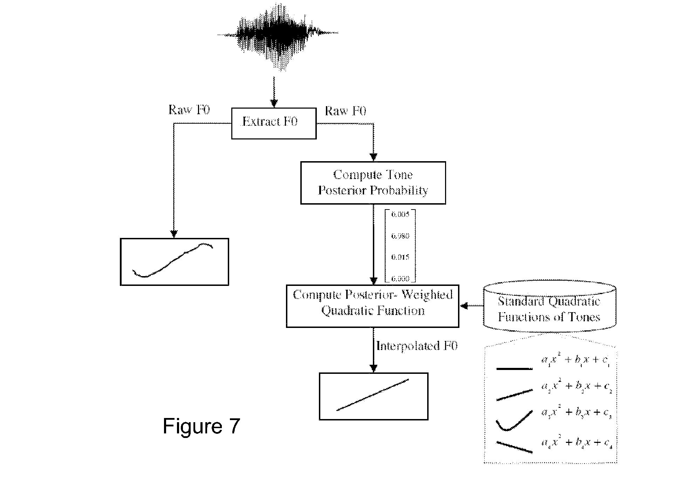

Figure 7 shows a comparison between raw F0 curve and posterior-weighted interpolated F0 curve from 4 basis functions of F0 curve. In Figure 7 the basis F0 curves are represented by standard quadratic functions.

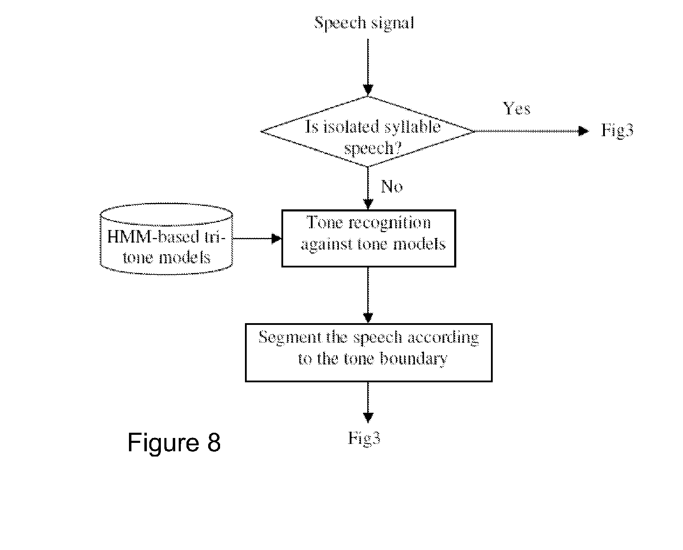

Figure 8 shows a flow chart of boundary processing for continuous speech.

In Figure 8, since the real tone label in the utterance is unknown, tone recognition procedure is performed to get the accurate tone boundary using tri-tone HMM model. If reliable syllable labels for each utterance are available, the HMM-based phone models can also be used to perform the syllable forced-alignment to get the syllable boundary. The speech with the exact tone or syllable boundary is transformed into figure 3 as its input to synthesize the speech with target tones.

Tone pattern in continuous speech changes given different tone contexts. Context-dependent F0 sequence of tone is generated for the continuous speech. In data template-based generation method, the continuous speech is first segmented according to the tone or syllable boundary; then the F0 sequence with same tone context is collected to train the standard F0 sequence template; finally in the synthesis procedure F0 sequence template with the same tone context as current speech is used to replace the current F0 sequence. In the rule-based generation method, time-normalized polynomial functions of four-tone can be divided into more elaborate functions according to their different tone context, for example, the time-normalized polynomial functions of t2-t1+t3 and t1-t1+t3 are different despite both centre tones are tone 1. Hence according to the tone context of target tone the corresponding time-normalized polynomial function is used to generate the F0 sequence of the target tone.

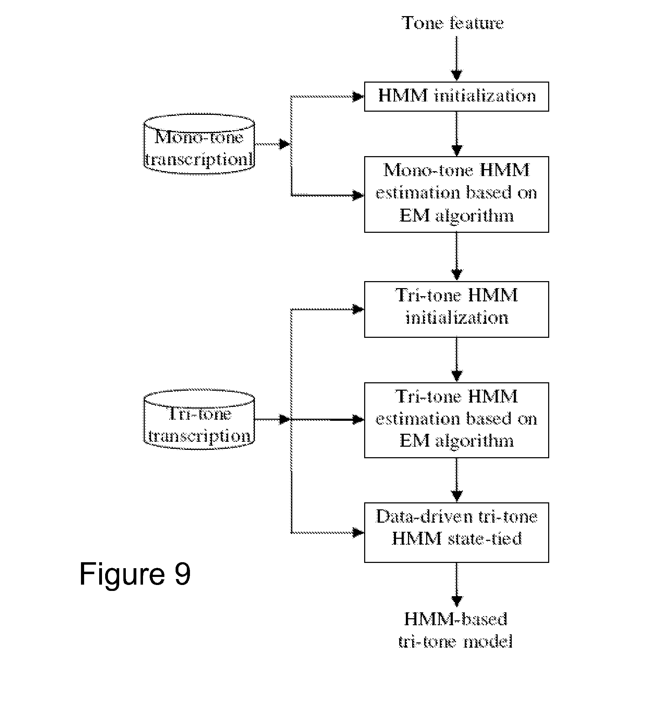

Figure 9 shows the tri-tone HMM training procedure. The tone feature is a sequence of 6-dimensional vector which consist of F0 and Energy and their first and second derivatives.

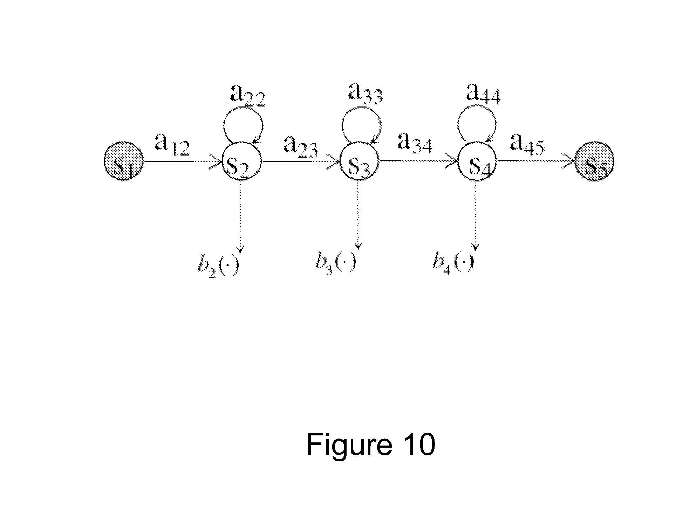

Figure 10 shows the topology of HMM-based tone model, showing states and transitions. Each tone model is a 5 hidden states, left-to-right, HMM where entry and exit states are non-emitting. The states $S_2$, $S_3$ and $S_4$ are emitting states and have output probability distributions associated with them. For the state $j$ the output probability $b_j(o_t)$ of generating observation $o_t$ is given by

$$b_j(o_t) = \sum_{m=1}^{M_j} c_{jm} \mathcal{N}(o_t; \mu_{jm}, \Sigma_{jm}) \qquad (1)$$

where $M_j$ is the number of mixture components in *state j* , $c_{jm}$ is the weight of the m'th component and $\mathcal{N}(\cdot; \mu, \Sigma)$ is a multivariate Gaussian with mean vector $\mu$ and covariance matrix $\Sigma$, that is

$$\mathcal{N}(o; \mu, \Sigma) = \frac{1}{\sqrt{(2\pi)^n |\Sigma|}} e^{-\frac{1}{2}(o-\mu)^T \Sigma^{-1}(o-\mu)} \qquad (2)$$

The transition matrix can be presented as:

$$A = \begin{pmatrix} 0 & a_{12} & 0 & 0 & 0 \\ 0 & a_{22} & a_{23} & 0 & 0 \\ 0 & 0 & a_{33} & a_{34} & 0 \\ 0 & 0 & 0 & a_{44} & a_{45} \\ 0 & 0 & 0 & 0 & 0 \end{pmatrix} \qquad (3)$$

Each row sums to one except for the final row which is always all zero since no transitions are allowed out of the final state.

The training procedure of tone model is to estimate the parameters of HMM, including the transition probability in transition matrix and mixture weight, mean vector and covariance matrix of each Gaussian component in output probability distribution. The parameter of HMM can be well estimated by using EM algorithm (background to the training procedure of HMM can be found in literature "S. Young et al. The HTK Book (for HTK Version 3.4), Cambridge University")

Usage of tri-tone HMM:

1) In the process of synthesizing the speech with target tone, HMM-based tri-tone model can give more accurate tone boundary and reliable tone context.

2) In the process of generating F0 curve of practical tone, the HMM-based tri-tone model can give more accurate posterior probability of tone feature against each tone model.

Forced-alignment:

If transcription (such as tone, phone or syllable) corresponding to the given utterance is available, the acoustic models corresponding to the transcription can be concatenated and aligned against the corresponding audio. The main purpose of forced-alignment is to obtain time boundary of each acoustic unit and its acoustic likelihood score.

Decoding:

The acoustic decoding is based on the principle of maximum likelihood to find the best word or phone sequence of the corresponding audio. The procedure can be expressed as follows:

$$W^* = \arg\max_{all\ W} p(O\,|\,W,\lambda) \qquad (4)$$

where $\lambda$ is the set of acoustic models, and W is a potential transcription.

Fundamental frequency (F0) extraction:

Fundamental frequency feature, or pitch or F0, reflects the vibrative frequency of vocal cords. In this invention, normalized cross-correlation function (NCCF) is used to extract the F0 (see "D. Talkin: A robust algorithm for pitch tracking, Speech Coding and Synthesis, edited by W.B. Kleijn and K.K. Paliwal, 1995, Elsevier Science). In the synthesis of speech, instantaneous-frequency-based fixed-point analysis method is used to extract more refined F0.( for background see "H. Kawahara: Fixed point analysis of frequency to instantaneous frequency mapping for accurate estimation F0 and periodicity, proc. Eurospeech'99, 2781-2784").

Spectrum extraction:

Spectrum reflects the change event of vocal track. It represents content of speech and voice characteristics of speaker. Firstly time-domain speech signal is converted into the frequency domain by short-time fast Fourier transform (FFT), and then the coefficient of each frequency band is smoothed and the periodical interference is removed using pitch-adaptive method.(H. Kawahara: Restructuring speech representations using a pitch-adaptive time-frequency smoothing and an instantaneous-frequency-based F0 extraction, Speech Communication, 27, 187-207, 1999".

Tri-tone HMM is a context-dependent acoustic modelling technique which can capture the change of tone pattern caused by co-articulation in different tone context. Assume tone sequence of an utterance is "t1, t1, t3, t2, t4, t4", its corresponding tri-tone sequence is "t1+t1, t1-t3+t2, t3-t2+t4, t2-t4+t4, t4-t4", where "ti" represents the tone "i", for example "t3" means tone 3. By using the context-dependent modelling method, tone models become more elaborate. In order to avoid data sparse problem, data-driven state-tying is performed to share the training data.

Given tone models $\lambda$, acoustic feature sequence $O$ and tone number $N$, the posterior probability of tone $t_i$ can be computed as follows:

$$P(t_i\,|\,O,\lambda) = \frac{p(O\,|\,t_i,\lambda)P(t_i)}{\sum_{j=1}^{N} p(O\,|\,t_j,\lambda)P(t_j)} \qquad (5)$$

In the case of using tri-tone models, the equation can be modified as follows:

$$P(t_i \mid O, \lambda) = \frac{p(O \mid t_l - t_i + t_r, \lambda) P(t_l - t_i + t_r)}{\sum_{j=1}^{N} p(O \mid t_l - t_j + t_r, \lambda) P(t_l - t_j + t_r)} \tag{6}$$

where $t_l$ is the preceding tone of $t_i$, and $t_r$ the subsequent tone.

If the prompt text contains multi-syllable words or it is a sentence, the posterior probability of each syllable can be computed by one of the following two approaches:

    1) Firstly the tone or syllable boundary is obtained by using tone models or phone models; then equation (6) is used to compute the posterior probability of each tone.
    2) Context-dependent tri-tone model is used directly to decode the continuous speech and lattice with multi-candidate results is generated; then all paths in the lattice is aligned to generate the confusion network (for general background see "L. Mangu, E. Brill, A. Stolcke: Finding consensus in speech recognition: word error minimization and other applications of confusion networks, Computer Speech & Language 14(4): 373-400, 2000"); finally, the tone score on each arc in the each confusion set is the posterior probability of the tone.

Tone GOP score can be computed as the log likelihood ratio of between tone forced-alignment and recognition. (for background see "S.M. Witt: Use of speech recognition in computer-assisted language learning, PhD. Thesis, 1999").

$$G(t_i) = \frac{\log\left(\frac{p(O \mid t_i, \lambda) P(t_i)}{\sum_{j=1}^{N} p(O \mid t_j, \lambda) P(t_j)}\right)}{|O|}$$
$$\cong \frac{\log p(O \mid t_i, \lambda) - \log \max_{j=1...N} p(O \mid t_j, \lambda)}{|O|} \tag{7}$$

where $\lambda$ is the tone models, $O$ is the acoustic feature sequence of tone $t_i$, $|O|$ is the length of the feature sequence (frame number). If tri-tone model is used to compute tone evaluation score, tone boundaries don't need to be determined in advance. The optimal tone boundary can be obtained automatically by decoding using tri-tone models. Usage of tri-tone model reduces the dependence on phone models and can get more exact tone boundary and likelihood score. In the tone evaluation of continuous speech, better performance can be obtained by using tri-tone model.

The invention adopts source-filter model to synthesize the listener's speech with target tone. The flow chart of speech synthesis with target tone is shown in Figure 3, including the following steps:

    1) Analyze acoustic features of the speech from the learner, and extract pitch feature, aperiodic harmonic components and speech spectrum;
    2) Replace or modify the F0 sequence in learner's speech by the generated F0 sequence of the target tone.
    3) Use the F0 sequence of target tone and original spectrum to synthesise new speech with target tone.

In the acoustic analysis for the speech from the learner, the excitation features, i.e. pitch sequence, aperiodic harmonic components and the impulse response of the vocal tract, i.e. spectrum, are extracted. The invention uses instantaneous-frequency-based fixed-point analysis method to extract more refined F0.( for background see "H. Kawahara: Fixed point analysis of frequency to instantaneous frequency mapping for accurate estimation F0 and periodicity, proc. Eurospeech'99, 2781-2784" The speech spectrum is extracted by short-time Fourier transform and smoothed by removing the periodical interference using pitch-adaptive analysis method. (H. Kawahara: Restructuring speech representations using a pitch-adaptive time-frequency smoothing and an instantaneous-frequency-based F0 extraction, Speech Communication, 27, 187-207, 1999")

The F0 sequence of target tone can be generated by using rule-based method or template-based method, or the incorporate method.

The rule-based target tone generation method:

According to the research findings of phonetics experiment, the generation model of standard tone can be represented as time-normalized linear polynomial, i.e.

$$F_i(t) = f_c + f_d \cdot f_i(t) \qquad (8)$$

where t is the normalized time, $i \in \{1,2,3,4\}$ represents the tone kind, $f_c$ is the pitch mean embodying the pitch level of the speaker, $f_d$ is the scale of pitch change, $f_i(t)$ is the standard tone shape function. In the implementation instance the tone shape function can be represented as:

$$f_i(t) = a_i + b_i t - c_i t^2 + d_i t^3 - e_i t^4 \qquad (9)$$

Different tones have different tone shape functions, i.e. different function coefficients $\{a_i, b_i, c_i, d_i, e_i\}$. After choosing the tone shape function according to the target tone kind and computing $f_c$ and $f_d$, the F0 sequence of target tone can be obtained by substituting them into the equation (8).

The template-based target tone generation method:

1) Group the speech in standard speech database according to the syllable; and group the speech with the same syllable according to the tone;

2) Extract the pitch feature and smooth the F0 sequence.

3) Train F0 sequence template of each tone of each syllable using DTW (Dynamic Time Warping) algorithm on each group speech.

4) When generating F0 sequence of the target tone, choose the F0 sequence template with same syllable and tone kinds as the demonstration text as the F0 sequence of the target tone.

When using the F0 sequence of target tone to replace the F0 sequence of original tone, if the lengths of the target tone and original tone are different, the spectrum of the original speech is scaled to the same length as the target tone by interpolating. Furthermore, pitch-adaptive method is used to smooth the interpolated spectrum by the F0 sequence of target tone. Moreover, the energy distribution of the spectrum can be adjusted according to the target tone.

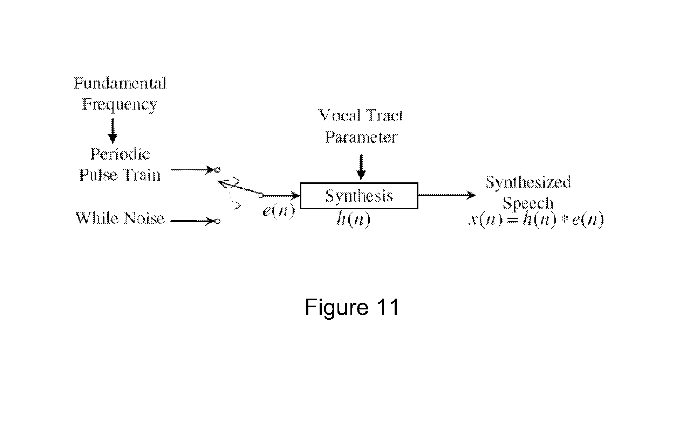

Finally, based on source-filter model, the learner's speech with target tone is synthesized using the F0 sequence and response filter of vocal tract. The principle theory of source-filter model is shown in Figure 11.

Source-filter model is a universal model to represent the production of speech signal. For background see "H. Dudley, Remaking speech, J. Acoust. Soc. Amer. 11 (2), 169-177, 1939". According to source-filter model, the digital speech signal is generated from the excitation signal filtered by a time-varying linear system, that is, the speech signal $x(n)$ can be computed from the excitation signal $e(n)$ from vocal cord and the impulse response $h(n)$ of the vocal tract using the convolution sum expression:

$$x(n) = h(n) * e(n) \qquad (10)$$

where the symbol * stands for discrete convolution operation. The excitation signal $e(n)$ from vocal cord is the F0 sequence in the voiced segment and while noise in the unvoiced segment. The impulse response $h(n)$ of the vocal tract is the spectrum of the learner's speech. Since the spectrum of the learner's original speech can be used in source-filter model based speech synthesis, the synthesized speech will not change the spectrum of speech, that is, the voice characteristics and speech content of the learner can be kept in the synthesized speech. The learner can then concentrate on apperceiving the tone pronunciation error by comparing his original pronunciation and synthesized speech. The learner can be induced heuristically to rectify his tone pronunciation.

The source-filter model based tone conversion can generate high quality speech with target tone without changing spectrum of original speech. Hence the phonetic pronunciation and speaker feature of the learner can be kept. The learner can then more intently concentrate on the perception of tone pronunciation errors and be heuristically inducted to revise tone pronunciations. At the same time, this also increases the amusement of the learning.

The tone curve generated from polynomial functions weighted by the tone posterior probabilities is smooth, and clearer, more straightaway than the raw F0 contour curve. The curvature and trend of F0 curve reflect accuracy grade of tone pronunciation. Hence it can provide more useful information for the learner than simply drawing the smoothed curve of the standard tone, or raw values of the learner's tone.

The use of tri-tone HMM model can detect tone boundary automatically and more accurately. This will make sentence-based tone curve plotting and tone posterior calculation easier and more accurate. Consequently, tone evaluation score and other evaluation features computed on the tri-tone model are also more accurate.

Thus we have described:

1) Synthesis of the learner's speech with target tone based on tone conversion.
2) Generation of error-dependent smoothed tone curve of the learner's speech based on polynomial curve weighting using tone posterior probabilities.
3) Algorithm of computing tone posterior probabilities based on HMM-based tri-tone model

No doubt many other effective alternatives will occur to the skilled person. It will be understood that the invention is not limited to the described embodiments and encompasses modifications apparent to those skilled in the art lying within the scope of the claims appended hereto.

**Claims**

1. A tonal language teaching computer system, the computer system comprising working memory, non-volatile program memory, non-volatile data memory storing tone definition data, said tone definition data defining a variation of fundamental frequency with time for each of a set of standard tones of said tonal language, a speech data input, and a processor coupled to said working memory, to said program memory, to said data memory, and to said speech input and wherein said program memory stores processor control code to:

   input tonal speech data for a sample of said input from speech data for a user characterising sample of said tonal language spoken by a user of the computer system;
   match said speech data to each of said set of standard tones defined by said tone definition data to determine a match probability for each said standard tone;
   determine a graphical representation of a weighted combination of said standard tones, and said graphical representation comprising a combined representation of said changes in fundamental frequency over time of said standard tones, wherein a said change in fundamental frequency over time of each said standard tone is weighted by a respective said match probability; and
   output data for displaying said graphical representation to said user.

2. A tonal language teaching computer system as claimed in claim 1 further comprising code to identify a segment of speech data comprising substantially a single tone to match each of said set of standard tones.

3. A tonal language teaching computer system as claimed in claim 1 or 2 wherein said code to determine said graphical representation comprises code to compute a weighted combination of a set of polynomial functions, wherein each said polynomial function represents a said change in fundamental frequency over time of a said standard tone.

4. A tonal language teaching computer system, in particular as claimed in claim 1, 2 or 3, the computer system comprising working memory, non-volatile program memory, non-volatile data memory storing tone definition data, said tone definition data defining a variation of fundamental frequency with time for each of a set of standard tones of said tonal language, a speech data input, and a processor coupled to said working memory, to said program memory, to said data memory, and to said speech input and wherein said program memory stores processor control code to:

   input tonal speech data for a user characterising sample of said tonal language spoken by a user of the computer system;
   analyse said user characterising sample speech data to identify one or more vocal tract characterising parameters characterising the vocal tract of said user;
   generate synthesised speech data representing said user speaking said tonal language by modifying a said variation of fundamental frequency with time for one of said standard tones using said one or more vocal tract characterising parameters characterising the vocal tract of said user; and

output said synthesised speech data generating synthesised speech for said user from said synthesised speech data.

5. A tonal language teaching computer system as claimed in claim 4 wherein said one or more vocal tract characterising parameters characterising the vocal tract of said user comprise a set of parameters defining a filter of a source-filter model of said vocal tract of said user, and wherein said synthesised speech data is generated by exciting said filter of said source-filter model at said fundamental frequency having a said variation with time of one of said standard tones.

6. A tonal language teaching computer system as claimed in claim 4 or 5 wherein said tone definition data defining a variation of fundamental frequency with time for each of a set of standard tones of said tonal language comprises data representing a said standard tone as a polynomial including parameter for one or both of a mean speaking pitch of a speaker and a scale of pitch change of said speaker; and
wherein said one or more vocal tract characterising parameters characterising the vocal tract of said user comprise parameters representing one or both of a said mean speaking pitch of said user and a said scale of pitch change of said user.

7. A tonal language teaching computer system as claimed in claim 4, 5 or 6 wherein said processor control code further comprises code to:

input speech data for user teaching sample of said tonal language spoken by said user; and
identify a spoken said standard tone in said user teaching sample speech data;
and
wherein said one of said standard tones modified by said vocal tract characterising parameters comprising said identified spoken standard tone.

8. A tonal language teaching computer system as claimed in claim 7 wherein said code to identify said spoken standard tone comprises code to implement a plurality of hidden Markov models (HMMs), wherein a said HMM models a tone to be identified as the tone in combination with at least a portion of one or both of a predecessor tone and a successor tone.

9. A tonal language computer system as claimed in claim 1 or 4, the system further comprising:

a feature extraction module having an input to receive said tonal speech data, said feature extraction module decomposing said tonal speech data to generate excitation data defining a variation of fundamental frequency with time of said tonal speech data, further generating impulse response data defining said tonal speech data substantially excluding said variation of fundamental frequency with time of said tonal speech data;
a tonal feature extractor having an input to receive said excitation data and said impulse response data, said tonal feature extractor processing said excitation data and said impulse response data using a probabilistic model to estimate a first and second tonal boundary in said excitation data and said impulse response data and generate a first impulse response data item defining a first segment of said variation of fundamental frequency with time of said tonal speech data bounded by said first and second tonal boundaries and generate a first excitation data item defining said first segment of said tonal speech data bounded by said first and second tonal boundary substantially excluding said variation of fundamental frequency with time;
a tonal memory to store target predetermined tonal data items comprising target excitation data items;
a tonal substitution module to receive said first excitation data item, said tonal substitution module substituting said first excitation data item with a selected target excitation data item from said predetermined tonal data items, said selected target excitation data item defining an excitation to be learnt, further comprising means for combining said selected target excitation data item with said first impulse response data item to generate a corrected first tonal speech data item;
outputting said corrected tonal output data, said corrected output data comprising said corrected first tonal speech data item.

10. The system of claim 9, wherein said selected target excitation data item and said first impulse response data item are of different durations, and said target excitation data item is modified to generate a target excitation data item of the same duration as said first impulse response data item, further using said target excitation data item of the same duration instead of said target excitation data item, in particular wherein said target excitation data item is interpolated to generate said target excitation data item of the same duration as said first impulse response data item.

**11.** The system of claim 9 or 10, wherein said probabilistic model in said tonal feature extractor comprises a plurality of Hidden Markov Models (HMMs), or tri-tone HMMs.

**12.** The system of claim 9, 10 or 11, further comprising a tonal feature evaluation module, said tonal feature evaluation module comprising means for comparing said first excitation data item with said predetermined tonal data items to generate excitation matching probabilities defining the posterior probability of each of said predetermined tonal data items;

means for using said excitation matching probabilities in combination with a mathematical representation of said predetermined tonal data items to determine weighted posterior probabilities, said weighted posterior probabilities comprising said mathematical representation of said predetermined tonal data items weighted by said excitation matching probabilities; and

means for using said weighted posterior probability to graphically represent the accuracy of said first excitation data item.

**13.** A tonal language speech processing computer system as claimed in any one of claims 1 to 3 and 9 to 12 when dependent on claim 1, wherein said program memory further stores processor control code to:

analyse said speech data to identify one or more vocal tract characterising parameters characterising the vocal tract of a speaker of said language sample to determine speaker characterising data; and wherein said output data is derived from said speaker characterising data;

wherein said one or more vocal tract characterising parameters characterising the vocal tract of said speaker comprise one or both of:

i) a set of parameters defining a source-filter model of said vocal tract of said user, and wherein said synthesised speech data is generated by exciting said source-filter model at said fundamental frequency having a said variation with time of one of said standard tones; and

ii) parameters representing one or both of a said mean speaking pitch of said user and a said scale of pitch change of said user.

**14.** A method of processing tonal speech data and generating corrected tonal output data responsive to identified tonal feature data, the method comprising:

decomposing said tonal speech data to generate excitation data defining a variation of fundamental frequency with time of said tonal speech data, further generating impulse response data defining said tonal speech data substantially excluding said variation of fundamental frequency with time of said tonal speech data;

processing said excitation data and said impulse response data using a probabilistic model to estimate a first and second tonal boundary in said excitation data and said impulse response data and generate a first impulse response data item defining a first segment of said variation of fundamental frequency with time of said tonal speech data bounded by said first and second tonal boundaries and generate a first excitation data item defining said first segment of said tonal speech data bounded by said first and second tonal boundary substantially excluding said variation of fundamental frequency with time;

storing target predetermined tonal data items comprising target excitation data items;

substituting said first excitation data item with a selected target excitation data item from said predetermined tonal data items, said selected target excitation data item defining an excitation to be learnt, combining said selected target excitation data item with said first impulse response data item to generate a corrected first tonal speech data item;

outputting said corrected tonal output data, said corrected output data comprising said corrected first tonal speech data item.

**15.** The method of claim 14, wherein said selected target excitation data item and said first impulse response data item are of different durations, the method further comprising:

modifying said target excitation data item to generate a target excitation data item of the same duration as said first impulse response data item, further using said target excitation data item of the same duration instead of said target excitation data item, in particular further comprising interpolating said target excitation data item to generate said target excitation data item of the same duration as said first impulse response data item; and/or further comprising:

comparing said first excitation data item with said predetermined tonal data items to generate excitation matching probabilities defining the posterior probability of each of said predetermined tonal data items;

using said excitation matching probabilities in combination with a mathematical representation of said predetermined tonal data items to determine weighted posterior probabilities, said weighted posterior probabilities comprising said mathematical representation of said predetermined tonal data items weighted by said excitation matching probabilities; and

using said weighted posterior probability to graphically represent the accuracy of said first excitation data item.

Figure 1

Figure 2

Figure 3

F0 sequence

Tone models → Computing tone posterior probability

Quadratic functions of tone curves → Weighting the Quadratic function

Drawing curve of Quadratic function

Figure 4

Figure 5

Figure 6

Figure 7

Figure 8

Tone feature

↓

HMM initialization

Mono-tone
transcription

Mono-tone HMM
estimation based on
EM algorithm

↓

Tri-tone HMM
initialization

Tri-tone
transcription

Tri-tone HMM
estimation based on
EM algorithm

↓

Data-driven tri-tone
HMM state-tied

↓

HMM-based
tri-tone model

Figure 9

Figure 10

Fundamental
Frequency

Vocal Tract
Parameter

Periodic
Pulse Train

$e(n)$

Synthesis
$h(n)$

Synthesized
Speech
$x(n) = h(n) * e(n)$

While Noise

Figure 11

Figure 12

Europäisches
Patentamt

European
Patent Office

Office européen
des brevets

# EUROPEAN SEARCH REPORT

Application Number

EP 10 19 2315

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 01/82291 A1 (LESSAC SYSTEMS INC [US]) 1 November 2001 (2001-11-01) * abstract; claim 1; figure 1 * ----- | 1,14 | INV. G09B19/04 |
| A | CN 101 383 103 A (ANHUI USTC IFLYTEK CO LTD [CN]) 11 March 2009 (2009-03-11) * the whole document * ----- | 1-15 | |
| A | CN 1 815 522 A (ZHONGKE DAXUNFEI INFORMATION S [CN]) 9 August 2006 (2006-08-09) * the whole document * ----- | 1-15 | |

TECHNICAL FIELDS
SEARCHED     (IPC)

G09B

The present search report has been drawn up for all claims

| Place of search | Date of completion of the search | Examiner |
|---|---|---|
| Munich | 5 May 2011 | Mennerun, Steeve |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

& : member of the same patent family, corresponding
     document

EPO FORM 1503 03.82 (P04C01)

## ANNEX TO THE EUROPEAN SEARCH REPORT
## ON EUROPEAN PATENT APPLICATION NO.

EP 10 19 2315

This annex lists the patent family members relating to the patent documents cited in the above-mentioned European search report.
The members are as contained in the European Patent Office EDP file on
The European Patent Office is in no way liable for these particulars which are merely given for the purpose of information.

05-05-2011

| Patent document cited in search report | | Publication date | Patent family member(s) | | Publication date |
|---|---|---|---|---|---|
| WO 0182291 | A1 | 01-11-2001 | AU | 5556001 A | 07-11-2001 |
| CN 101383103 | A | 11-03-2009 | NONE | | |
| CN 1815522 | A | 09-08-2006 | NONE | | |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 101383103
- CN 1815522
- CN 1920945
- CN 1912994

**Non-patent literature cited in the description**

- **S. YOUNG et al.** The HTK Book. Cambridge University
- A robust algorithm for pitch tracking. **D. TALKIN.** Speech Coding and Synthesis. Elsevier Science, 1995
- **H. KAWAHARA.** Fixed point analysis of frequency to instantaneous frequency mapping for accurate estimation F0 and periodicity, proc. *Eurospeech'99,* 1999, 2781-2784
- **H. KAWAHARA.** Restructuring speech representations using a pitch-adaptive time-frequency smoothing and an instantaneous-frequency-based F0 extraction. *Speech Communication,* 1999, vol. 27, 187-207
- **L. MANGU ; E. BRILL ; A. STOLCKE.** Finding consensus in speech recognition: word error minimization and other applications of confusion networks. *Computer Speech & Language,* 2000, vol. 14 (4), 373-400
- **S.M. WITT.** Use of speech recognition in computer-assisted language learning. *PhD. Thesis,* 1999
- **H. KAWAHARA.** Fixed point analysis of frequency to instantaneous frequency mapping for accurate estimation F0 and periodicity. *proc. Eurospeech'99,* 1999, 2781-2784
- **H. DUDLEY.** Remaking speech. *J. Acoust. Soc. Amer.,* 1939, vol. 11 (2), 169-177